(19) Europäisches Patentamt
European Patent Office
Office européen des brevets

(11) Veröffentlichungsnummer: **0 060 243**
**B1**

(12) **EUROPÄISCHE PATENTSCHRIFT**

(45) Veröffentlichungstag der Patentschrift: **14.11.84**

(51) Int. Cl.³: **G 03 F 3/08**

(21) Anmeldenummer: **80901796.5**

(22) Anmeldetag: **10.09.80**

(86) Internationale Anmeldenummer: **PCT/DE 80/00134**

(87) Internationale Veröffentlichungsnummer: **WO 82/00903 (18.02.82** Gazette **82/8)**

# (54) VERFAHREN UND SCHALTUNGSANORDNUNG ZUR PARTIELLEN ELEKTRONISCHEN RETUSCHE BEI DER FARBBILDREPRODUKTION.

(43) Veröffentlichungstag der Anmeldung: **22.09.82 Patentblatt 82/38**

(45) Bekanntmachung des Hinweises auf die Patenterteilung: **14.11.84 Patentblatt 84/46**

(84) Benannte Vertragsstaaten: **AT CH DE FR GB LI NL SE**

(56) Entgegenhaltungen:
**EP - A - 0 004 078**
**WO - A - 80/02607**
**DE - A - 2 360 270**
**DE - A - 2 848 376**
**FR - A - 2 394 114**
**US - A - 3 848 856**

(73) Patentinhaber: **DR.-ING. RUDOLF HELL GmbH, Grenzstrasse 1-5, D-2300 Kiel 14 (DE)**

(72) Erfinder: **KLIE, Jürgen, Schulkoppel 12, D-2301 Tökendorf (DE)**
Erfinder: **WELLENDORF, Klaus, Kreienholt 6, D-2305 Kitzeberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung bezieht sich auf die elektronische Reproduktionstechnik, insbesondere auf die Herstellung von korrigierten und retuschierten Farbauszügen mittels einer elektronischen Bildverarbeitungsanlage (Retuscheplatz).

Bei der elektronischen Farbreproduktion werden in einem Farbscanner durch optoelektronische Abtastung einer Vorlage drei primäre Farbmesswertsignale gewonnen, welche die Farbanteile Rot, Grün und Blau der abgetasteten Bildpunkte darstellen. Ein Farbkorrekturrechner korrigiert die Farbmesswertsignale und erzeugt daraus die zur Herstellung der Farbauszüge erforderlichen Farbauszugssignale, welche ein Mass für die im späteren Druck erforderlichen Druckfarbmengen sind.

Die Farbauszugssignale werden digitalisiert und als digitale Farbwerte bildpunktweise in einem Speichermedium abgelegt. In einer Bildverarbeitungsanlage können die gespeicherten Farbwerte verschiedener Einzelvorlagen nach einem Layoutplan zu der Datenmenge einer Gesamtseite vereinigt und/oder aber nachträgliche partielle Retuschen (Farb- und/oder Tonwertkorrekturen) durch Ändern der Farbwerte durchgeführt werden. Partielle, d.h. auf auswählbare, örtlich begrenzte Bildbereiche beschränkte Retuschen sind notwendig, um die im Farbrechner erfolgte Korrektur zu optimieren oder aber, um nachträglich redaktionelle Änderungen und Kundenwünsche zu berücksichtigen. Bei diesen Retuschen handelt es sich beispielsweise um das Aufsetzen von Glanzlichtern durch Aufhellen, um das Herausarbeiten von Schattenpartien durch Abdunkeln oder um die Verbesserung der Zeichnung durch Aufhellen und Abdunkeln, wobei häufig eine graduelle (velaufende) Wirkung, d.h. eine allmählich zunehmende oder abnehmende Wirkung, erreicht werden soll.

Zur Aufzeichnung der retuschierten Farbauszüge werden die geänderten Farbwerte aus dem Speichermedium ausgelesen, in analoge Farbauszugssignale zurückgewandelt und einem Farbscanner zugeführt, in dem die gerasterten oder ungerasterten Farbauszüge Gelb, Cyan, Magenta und Schwarz zur Herstellung von Druckformen belichtet werden.

In der deutschen Patentanmeldung P Nr. 2920058.6 (Internationale Patentanmeldung PCT/DE Nr. 80/00070) ist bereits ein Verfahren zur partiellen elektronischen Retusche vorgeschlagen worden, bei dem die digitalen Farbwerte unter Sichtkontrolle auf einem Monitor bildpunktweise und partiell, entsprechend dem gewünschten Retuscheeffekt im Farbbild oder im Farbauszug durch bildpunktanhängige Korrekturwerte geändert werden. Die Bildpunkt-Koordinaten der zu retuschierenden Farbwerte und die gewünschte Retuschestärke werden vom Retuscheur bestimmt, indem dieser den Koordinatenstift eines Koordinaten-Erfassungsgerätes wie einen Retuschepinsel über den zu retuschierenden Bildteil führt, wobei der Koordinatenstift die entsprechenden Bildpunkte berührt, und beispielsweise aus der Anzahl der Berührungen die Retuschestärke für die einzelnen Bildpunkte abgeleitet wird. Um grössere Bildteile schneller zu retuschieren, wird der Korrekturbereich und damit die Anzahl der mit jeder Berührung des Koordinatenstiftes erfassten und retuschierten Bildpunkte vergrössert, was einer Vergrösserung der Pinselfläche entspricht.

Diese in der deutschen Patentanmeldung P Nr. 2920058.6 angegebene Arbeitsweise mit dem Koordinatenstift als elektronischer Retuschpinsel gestattet zwar, jede Art von Verläufen zu erzielen, erfordert aber sehr viel Sorgfalt und ist besondere dann zeitaufwendig, wenn die Verläufe glatt ohne erkennbare Stufung sein sollen.

Aus der DE-PS Nr. 2848376 ist weiterhin ein Verfahren zur Farbkorrektur bekannt, mit dem Farbkorrekturwerte mit Verlauf gewonnen werden. In einem Farbkorrekturspeicher sind für die Farbwerte des Farbraumes nach einer Standard-Korrektur berechnete Standard-Korrekturwerte abgelegt.

Die Standard-Farbkorrekturwerte sind durch diejenigen Farbwerte adressierbar, welche die Raumkoordinaten der betreffenden Farbwerte darstellen. Um eine ausgewählte Farbe abweichend von der Standard-Korrektur korrigieren zu können, wird der zu dem Farbort der ausgewählten Farbe gehörende Standard-Farbkorrekturwert durch einen Selektiv-Farbkorrekturwert ersetzt. Zur Erzielung eines Korrekturverlaufes innerhalb eines um den Farbort der ausgewählten Farbe liegenden räumlichen Korrekturbereichs werden gleichzeitig die Standard-Farbkorrekturwerte der in den Korrekturbereich fallenden Farborte in Abhängigkeit ihres räumlichen Abstandes zu dem Farbort der ausgewählten Farbe in entsprechende Selektiv-Farbkorrekturwerte geändert. Die Änderung erfolgt beispielsweise in der Weise, dass der Selektiv-Farbkorrekturwert der ausgewählten Farbe maximal ist, die Selektiv-Farbkorrekturwerte bis zum Rande des Korrekturbereiches abnehmen und am Rande den Standard-Farbkorrekturwerten entsprechen.

Bei diesem bekannten Farbkorrekturverfahren wird innerhalb eines räumlichen Korrekturbereiches ein ebenfalls räumlicher Korrekturverlauf erzielt. Bei der Retusche soll dagegen ein flächiger Korrekturverlauf innerhalb einer partiellen Korrekturfläche des Farbbildes erreicht werden.

Aufgabe der vorliegenden Erfindung ist es daher, ein Verfahren und eine Schaltungsanordnung zur partiellen elektronischen Retusche bei der Farbbildreproduktion anzugeben, welche das vorgeschlagene Verfahren dahingehend verbessert, dass graduelle Retuscheänderungen und Farbverläufe einfacher und in kürzerer Zeit durchzuführen sind.

Diese Aufgabe wird bei der vorliegenden Erfindung dadurch gelöst, dass die einzelnen Beträge, um welche die Korrekturwerte ($Y_R$, $M_R$, $C_R$, $K_R$) für die innerhalb des Korrekturbereiches (Pinselfläche) liegenden Bildpunkte pro Korrekturschritt geändert werden, durch freie Wahl von Bewertungsfaktoren w vorgebbar sind.

In vorteilhafter Weise werden für alle Korrekturwerte ($Y_R$, $M_R$, $C_R$, $K_R$) des Korrekturbereichs gleiche Änderungsbeträge vorgegeben, wodurch innerhalb des Korrekturbereichs eine gleichmässige Retuschestärke erzielt wird.

Vorzugsweise werden für die Korrekturwerte ($Y_R$, $M_R$, $C_R$, $K_R$) vom Zentrum des Korrekturbereiches zu dessen Rand abnehmende Änderungsbeträge vorgegeben, wodurch innerhalb des Korrekturbereichs eine graduelle (verlaufende) Retuschestärke erzielt wird. Die Änderungsbeträge können nach einer wählbaren Funktion, insbesondere nach einer Gaus-Funktion, vorgegeben werden.

Die Korrekturwerte ($Y_R$, $M_R$, $C_R$, $K_R$) werden zu den bildpunktmässig zugeordneten Farbwerten (Y, M, C, K) hinzuaddiert (Positiv-Retusche) oder von diesen abgezogen (Negativ-Retusche).

In einer vorteilhaften Ausführungsform wird vorgeschlagen, dass

a) für die einzelnen Farbkomponenten Farbinkremente (Y, M, C, K) vorgegeben werden, welche die kleinsten Änderungsbeträge für die Korrekturwerte ($Y_R$, $M_R$, $C_R$, $K_R$) sind,

b) die Bildpunkt-Koordinatenpaare (x,y) des Korrekturbereichs festgestellt werden,

c) für jedes festgestellte Bildpunkt-Koordinatenpaar (x,y) pro Korrekturschritt ein die Retuschestärke bestimmender Retuschefaktor r ermittelt wird, welcher den Korrekturwert ($Y_R$, $M_R$, $C_R$, $K_R$) als Anzahl der zu addierenden Farbinkremente angibt, und

d) bildpunktmässig zugehörige Retuschefaktoren r und Farbinkremente ($\Delta Y$, $\Delta M$, $\Delta C$, $\Delta K$) miteinander multipliziert werden, um die jeweiligen Korrekturwerte ($Y_R$, $M_R$, $C_R$, $K_R$) zu erhalten.

Vorgesehen ist, dass

a) mindestens ein Bildpunkt-Koordinatenpaar ($x_o$, $y_o$) des Korrekturbereichs durch Markieren mittels einer Markiervorrichtung eines Koordinaten-Erfassungsgeräte (50, 51, 52), insbesondere mittels eines Koordinatenstiftes 51, erfasst wird, und

b) die restlichen Bildpunkt-Koordinatenpaar (x,y) des Korrekturbereichs in Abhängigkeit vom markierten Bildpunkt-Koordinatenpaar ($x_o$, $y_o$) berechnet werden.

Durch Auszahl der zu berechnenden Bildpunkt-Koordinatenpaare (x,y) um das markierte Bildpunkt-Koordinatenpaar ($x_o$, $y_o$) werden Form und Grösse des Korrekturbereichs festgelegt.

Eine vorteilhafte Weiterbildung sieht vor, dass a) jede Punkt-Berührung mit der Markiervorrichtung 51 des Koordinaten-Erfassungsgerätes 50, 51, 52 einem Korrekturschritt entspricht, und
b) jeder Retuschefaktor r für ein Bildpunkt-Koordinatenpaar des Korrekturbereichs aus der Anzahl von Punkt-Berührungen n und einem für das betreffende Bildpunkt-Koordinatenpaar vorgegebenen Bewertungsfaktor w berechnet wird, welcher den Änderungsbetrag des betreffenden Korrekturwertes ($Y_R$, $M_R$, $C_R$, $K_R$) pro Punkt-Berührung als Vielfache der Farbinkremente ($\Delta Y$, $\Delta M$, $\Delta C$, $\Delta K$) angibt, wobei der Koordinatenstift 51 wie ein Retuschepinsel über den zu retuschierenden Bildteil geführt wird, um den Korrekturbereich (Pinselfläche) zu verschieben.

Es wird vorgeschlagen, für alle Korrekturwerte des Korrekturbereichs gleiche Bewertungsfaktoren w vorzugeben, wodurch innerhalb des Korrekturbereichs eine gleichmässige Retuschestärke erreicht wird. Alternativ wird vorgeschlagen, für die Korrekturwerte vom Zentrum des Korrekturbereiches zu dessen Rand abnehmende Bewertungsfaktoren w vorzugeben, wodurch innerhalb des Korrekturbereichs eine graduelle (verlaufende) Retusche erreicht wird.

In bevorzugter Weise werden die digitalen Farbwerte (Y, M, C, K) aus dem Speichermedium 1 ausgelesen, durch die Korrekturwerte ($Y_R$, $M_R$, $C_R$, $K_R$) geändert und die korrigierten Farbwerte (Y', M', C', K') nach beendeter Retusche wieder auf dem Speichermedium 1 abgelegt.

Eine vorteilhafte Verbesserung ist, dass das unretuschierte oder retuschierte Farbbild (Original) bzw. ein unretuschierter oder retuschierter Farbauszug zur Sichtkontrolle auf einem Monitor 2 dargestellt wird, dass in einen Bildschirm 3 eine verschiebbare Lichtmarke 31 eingeblendet wird, und dass die Bewegung der Lichtmarke 31 mit der Bewegung des Koordinatenstiftes 51 des Koordinaten-Erfassungsgerätes (50, 51, 52) synchronisiert wird.

Vorgesehen ist, dass die digitalen Farbwerte (Y, M, C, K) der einzelnen Farbauszüge aus dem Speichermedium 1 in einen Bildwiederholspeicher 7 geladen werden und dass der Bildwiederholspeicher 7 zur punktweisen Aufzeichnung auf dem Monitor 2 zyklisch ausgelesen wird.

In bevorzugter Weise werden die ermittelten Retuschefaktoren r bildpunktweise in einen Retuschespeicher 49 überschrieben, und der Retuschespeicher 49 wird zur bildpunktmässigen Zuordnung von Farbwerten (Y, M, C, K) und Korrekturwerten ($Y_R$, $M_R$, $C_R$, $K_R$) synchron mit dem Bildwiederholspeicher 7 ausgelesen.

Die durch den Korrekturvorgang geänderten Retuschefaktoren werden jeweils in eine Austastlücke der Bildaufzeichnung in den Retuschespeicher 49 überschrieben.

Eine vorteilhafte Weiterbildung besteht darin, dass die Bildpunkt-Koordinatenpaare (x,y) der markierten Punkte in der Reihenfolge ihrer Erfassung listenmässig abgelegt werden, und dass die Bildpunkt-Koordinatenpaar (x,y) in umgekehrter Reihenfolge aufgerufen und die entsprechenden Retuschefaktoren r in dem Retuschespeicher 49 geändert werden, um die bei den vorherigen Berührungen der Punkte erfolgte Retusche konturengenau rückgängig zu machen.

In einer weiteren bevorzugten Weiterbildung wird die gesamte Korrektur durch Löschen des Retuschespeichers 49 rückgängig gemacht.

In vorteilhafter Weise wird die Pinselfläche durch eine entsprechende vergrösserte Lichtmarke 31 angezeigt.

Der zu retuschierende Bildteil wird vorteilhafterweise durch eine elektronische erzeugte Maske begrenzt.

Eine vorteilhafte Anordnung zur Durchführung des Verfahrens besteht aus einem Farbgeber 38 zur Bildung der Farbinkremente ($\Delta Y$, $\Delta M$, $\Delta C$, $\Delta K$), einem Retuschegeber 39* zur Bildung der Retuschefaktoren r für die zu korrigierenden Farbwerte (Y, M, C, K), einem Bewertungsspeicher 87, der einen Programmiereingang 88 für die gewünschten Bewertungsfaktoren w des Korrekturbereichs 72 aufweist, einem mit dem Farbgeber 38 und dem Retuschegeber 39* verbundenen Korrekturwertgeber 40 zur Bildung der Korrekturwerte ($Y_R$, $M_R$, $C_R$, $K_R$) und aus dem Bildwiederholspeicher 7 nachgeschalteten Verknüpfungsstufen (15, 16, 17, 18) in den Farbkanälen zur Änderung der Farbwerte durch die Korrekturwerte.

Der Retuschegeber 39* ist in bevorzugter Weise aus einem Koordinaten-Erfassungsgerät 50, 51, 52 zur Ermittlung der Bildpunkt-Koordinaten (x,y) der zu korrigierenden Farbwerte, aus einer mit dem Koordinaten-Erfassungsgerät 50, 51, 52 verbundenen Auswerte-Schaltung 48* zur Bildung der Retuschefaktoren r für jedes erfasste Koordinatenpaar und aus einem mit der Auswerte-Schaltung 48* verbundenen Retuschespeicher 49 aufgebaut.

Die Erfindung wird im folgenden anhand der Fig. 1 bis 9 näher erläutert. Es zeigen:

Fig. 1 eine Schaltungsanordnung zur partiellen elektronischen Retusche bei der Farbbildreproduktion;

Fig. 2 ein Flussdiagramm;

Fig. 3 verschiedene Formen von Pinselflächen;

Fig. 4 eine Bewegungsbahn der Pinselfläche;

Fig. 5 eine grafische Darstellung;

Fig. 6 eine weitere grafische Darstellung;

Fig. 7 eine grafische Darstellung zur Koordinatenbestimmung;

Fig. 8 ein Ausführungsbeispiel für einen Retuschegeber;

Fig. 9 ein Flussdiagramm.

Fig. 1 zeigt den prinzipiellen Aufbau einer Schaltungsanordnung zur partiellen elektronischen Retusche (Retuscheplatz) bei der Farbbildreproduktion und Fig. 2 ein Flussdiagramm zur Erläuterung des Verfahrensablaufs. Die Schaltungsanordnung stimmt bis auf den Retuschegeber im wesentlichen mit der in Fig. 1 der genannten deutschen Patentanmeldung P Nr. 2920058.6 (Internationale Patentanmeldung PCT/DE Nr. 80/00070) dargestellten Anordnung überein. Aus diesem Grunde kann auf eine detaillierte Beschreibung identischer Baugruppen, die mit denselben Bezugszahlen belegt sind, verzichtet werden.

Ein Speichermedium 1 (Magnetband; Magnetplatte) enthält die bereits in einem Farbscanner korrigierten digitalen Farbwerte für die Farbauszüge Gelb (Y), Magenta (M), Cyan (C) und Schwarz (K) eines zu reproduzierenden Farbbildes. Das Farbbild soll unter Sichtkontrolle auf dem Bildschirm 3 eines Farbmonitors 2 einer partiellen Retusche mit gradueller (verlaufender) Wirkung, d.h. allmählich zunehmender oder abnehmender Stärke, unterzogen werden.

Die zur Darstellung des Farbbildes oder eines entsprechenden Bildausschnitts benötigten Farbwerte werden mittels eines Prozessrechners 4 aus dem gesamten Datenbestand des Speichermediums 1 ausgewählt oder berechnet und über Datenbusse 5 und 6 in einen Bildwiederholspeicher 7 übertragen.

Zur Erzeugung eines Standbildes auf dem Farbmonitor 2 ruft ein Speichersteuerwerk 8 über einen Adressbus 9 die X/Y-Adressen des Bildwiederholspeichers 7 zyklisch auf. Die gespeicherten Farbwerte F[Y, M, C, K] werden ausgelesen und über Datenleitungen 11, 12, 13 und 14 digitalen Addierstufen 15, 16, 17 und 18 zugeführt. In den Addierstufen 15, 16, 17 und 18 werden entsprechend der gewünschten Retuschewirkung digitale Korrekturwerte $F_R$ [$Y_R$, $M_R$, $C_R$, $K_R$] hinzugefügt (Positiv-Retusche) oder von diesen abgezogen (Negativ-Retusche), um die retuschierten Farbwerte F' [Y', M', C', K'] zu erhalten. Die retuschierten Farbwerte F' gelangen über einen Datenbus 20 und einen Lichtmarkengenerator 21 auf einen D/A-Wandler 22, der vier analoge Farbauszugssignale erzeugt.

Ein nachgeschalteter Drucknachbildungsrechner 23 formt die vier Farbauszugssignale derart in die Ansteuersignale r, g und b für den Farbmonitor 2 um, dass das dargestellte Farbbild denselben farblichen Eindruck vermittelt wie der spätere Mehrfarbendruck selbst. Ein von dem Speichersteuerwerk 8 synchronisierter Taktgenerator 24 steuert die Farbbildaufzeichnung.

Die Korrekturwerte $F_R$ werden in einer Korrekturschaltung 19 gewonnen, die aus einer Eingabestufe 37 mit einer Reihe von Funktionstasten 37', 37'' und 37''', aus einem Farbgeber 38, aus einem gegenüber der genannten deutschen Patentanmeldung modifizierten Retuschegeber 39* und aus einem Korrekturwertgeber 40 besteht.

Der ortsabhängige Korrekturwert $F_R(x,y)$ für jeden Bildpunkt mit den Koordinaten x und y ist durch die allgemeine Gleichung:

$$F_R(x,y) = \Delta F \cdot r(x,y) \quad (1)$$

oder für die einzelnen Farbauszüge durch die Gleichungen:

$$\begin{aligned} Y_R(x,y) &= \Delta F \cdot r(x,y) \quad (2)\\ M_R(x,y) &= \Delta M \cdot r(x,y)\\ C_R(x,y) &= \Delta C \cdot r(x,y)\\ K_R(x,y) &= \Delta K \cdot r(x,y) \end{aligned}$$

gegeben.

In den Gleichungen (1) und (2) sind $\Delta F$ [$\Delta Y$, $\Delta M$, $\Delta C$, $\Delta K$] ortsunabhängige Farbinkremente, welche die jeweils kleinsten Änderungsbeträge für die Farbwerte darstellen. Die Farbinkremente werden in dem Farbgeber 38 aus den Farbwerten einer Anfangsfarbe und einer Zielfarbe für die Retusche berechnet.

Ein Mass für die Retuschestärke ist der Retuschefaktor r, welcher für jeden Bildpunkt die Anzahl der zu addierenden Farbinkremente F angibt, um den betreffenden Korrekturwert $F_R$ zu erhalten.

Durch Vergrösserung der Anzahl von Farbinkrementen wird eine Zunahme der Retusche und durch Verkleinerung der Anzahl eine entsprechende Abnahme der Retusche erreicht. Die Retuschefaktoren r werden in dem Retuschegeber 39* gewonnen.

Der Retuschegeber 39*, dessen Aufbau und Wirkungsweise in Fig. 8 näher beschrieben wird, besteht im wesentlichen aus einem Koordinaten-Erfassungsgerät mit Digitalisiertablett 50, Koordinatenstift 51 und Messstufe 52, aus einer modifizierten Auswerte-Schaltung 48* zur Berechnung der Retuschefaktoren und aus einem Retuschespeicher 49.

Mittels des Koordinatenstiftes 51 werden sowohl der Korrekturbereich über den zu retuschierenden Bildteil verschoben als auch die jeweilige Anzahl von Korrekturschritten als Anzahl von Bildpunkt-Berührungen ermittelt. Während der Koordinatenstift 51 selbst jeweils nur einen Bildpunkt markiert, werden in der Auswerte-Schaltung 48* des Retuschegebers 39* gleichzeitig die Retuschefaktoren mehrerer auswählbarer Bildpunkte in der Umgebung des markierten Bildpunktes bestimmt. Diese Bildpunkte bilden den Korrekturbereich. Die gleichzeitige Bestimmung der Retuschefaktoren des Korrekturbereiches entspricht einer Vergrösserung des Wirkungsbereiches des Koordinatenstiftes 51 oder der Pinselfläche, wodurch grössere Flächen schneller retuschiert werden können.

Die frei wählbare Anzahl und die Lage der gleichzeitig angesprochenen Bildpunkte in bezug auf den markierten Bildpunkt bestimmen Grösse und Form des Korrekturbereichs bzw. der Pinselfläche, die mit dem Koordinatenstift 51 über den zu retuschierenden Bildteil bewegt wird.

Zur Erläuterung sind in Fig. 3 einige Formen von Pinselflächen dargestellt. Fig. 3a zeigt eine quadratische Pinselfläche mit 5×5 Bildpunkten 71, Fig. 3b eine rechteckige Pinselfläche aus 3×7 Bildpunkten 71 und Fig. 3c eine der Kreisform angenäherte Pinselfläche. Die mit dem Koordinatenstift 51 berührten Bildpunkte, im Ausführungsbeispiel jeweils die Mittelpunkte der Pinselfläche, sind in den Figuren durch dickere Linien hervorgehoben.

Fig. 4 zeigt die Verschiebung einer quadratischen Pinselfläche 72, die aus 3×3 Bildpunkten besteht, über einen zu retuschierenden Bildteil. Die Bewegungsbahn des Koordinatenstiftes 51 ist durch eine gestrichelte Linie 73 angedeutet.

Zurück zu Fig. 1.

Erfindungsgemäss sind die Beträge, um die die Korrekturwerte $F_R$ innerhalb der Pinselfläche pro Korrekturschritt geändert werden können, frei wählbar. Die entsprechenden Retuschefaktoren r werden gemäss Gleichung (3) in der Auswerte-Schaltung 48* berechnet:

$$r(x,y) = n(x,y) \cdot w(x,y) \qquad (3)$$

In der Gleichung (3) bedeutet n die gewünschte Anzahl von Korrekturschritten bzw. Punkt-Berührungen mit dem Koordinatenstift 51 und w ein frei wählbarer Bewertungsfaktor, welcher für jeden Bildpunkt den Änderungsbetrag pro Korrekturschritt als Vielfache der Farbinkremente $\Delta F$ angibt.

Im Falle einer gleichmässigen Retuschestärke innerhalb der Pinselfläche, wie sie z.B. für eine deckende Retusche gewünscht wird, werden die Retuschefaktoren aller innerhalb der Pinselfläche liegender Bildpunkte jeweils um denselben Betrag geändert. Die Bewertungsfaktoren w sind konstant, beispielsweise 1. Mit jeder Berührung durch den Koordinatenstift 51 werden die Retuschefaktoren r dann um 1 erhöht (Verstärkung der Retusche) oder um 1 erniedrigt (Rücknahme der Retusche).

Im Falle einer verlaufenden Retuschestärke werden die Retuschefaktoren r innerhalb der Pinselfläche liegenden Bildpunkte entsprechend den gewählten Bewertungsfaktoren w um unterschiedliche Beträge geändert, wodurch die Retuschestärke in vorteilhafter Weise innerhalb der Pinselfläche graduell oder verlaufend, d.h. allmählich ansteigend und/oder abfallend, ist.

Beispielsweise können die Bewertungsfaktoren w so gewählt werden, dass eine vom Zentrum der Pinselfläche zu deren Rand abnehmende Retuschestärke erreicht wird. Die Retuschestärke kann sich innerhalb der Pinselfläche nach der Gauss-Kurve oder einer anderen Funktion ändern. Die Möglichkeiten sind nicht auf die angegebenen Beispiele beschränkt. Innerhalb der Pinselfläche können beliebige Bewertungsfaktoren verteilt werden.

Die Bildung der Retuschefaktoren wird anhand von grafischen Darstellungen in den Fig. 5 und 6 erläutert, wobei die nach einer bestimmten Anzahl von Korrekturschritten (Berührungen) ermittelten Retuschefaktoren in die Pinselfläche eingetragen wurden.

Fig. 5 zeigt die Verhältnisse für eine Pinselfläche mit gleichmässiger Retuschestärke. In Fig. 5a ist das Bewertungsschema dargestellt. Alle Bildpunkte der Pinselfläche werden mit w=1 bewertet. Nach einer Berührung (n = 1) entsprechend der Fig. 5b sind alle Retuschefaktoren 1 und die Korrekturwerte nach Gleichung (1) $F_R = \Delta F$. Nach beispielsweise drei Korrekturschritten (n = 3), entsprechend der Fig. 5c, haben sich alle Retuschefaktoren auf 3 erhöht, und die Korrekturwerte sind $F_R = 3\,\Delta F$.

Fig. 6 zeigt die Verhältnisse für eine Pinselfläche mit verlaufender Retuschestärke. In Fig. 6a ist wiederum ein Bewertungsschema dargestellt, nach dem jetzt eine abnehmende Retuschestärke in Abhängigkeit des Abstandes vom Mittelpunkt der Pinselfläche erreicht wird. Die Retuschefaktoren nach einem Korrekturschritt (n = 1) sind in Fig. 6b und nach drei Korrekturschritten (n = 3) in der Fig. 6c dargestellt. Durch die Bewertung des Bildpunktes 71 mit w = 1 und des Bildpunktes 71' mit w = 2 ergeben sich beispielsweise nach drei Korrekturschritten für den Bildpunkt 71 der Korrekturwert $F_R = 3\,\Delta F$ und für den Bildpunkt 71' bereits der doppelte Korrekturwert, nämlich $F_R = 6\,\Delta F$. Die Retuschefaktoren ausserhalb der Pinselfläche sind Null. Gleichzeitig sind in den Figuren für die einzelnen Fälle die Profile der Retuschestärke durch den Mittelpunkt der Pinselfläche schematisch angedeutet.

Zurück zu Fig. 1.

Die in der Auswerte-Schaltung 48* des Retuschegebers 39* ermittelten Retuschefaktoren r werden während der Austastlücke der Bildaufzeichnung auf dem Farbmonitor 2 über einen Datenbus 55 in den Retuschespeicher 49 überschrieben. Die entsprechenden Adressen des Retuschespeichers 49 werden über einen Adressbus 54 angewählt.

Die Austastlücke der Bildaufzeichnung wird vom Speichersteuerwerk 8 über eine Leitung 56 an die Auswerte-Schaltung 48* signalisiert. Über Adressbusse 9 und 9' werden die Adressen des Bildwiederholspeichers 7 und des Retuschespeichers 49 zyklisch und synchron aufgerufen, wodurch bildpunktmässig zugeordnete digitale Farbwerte F und Retuschefaktoren r gleichzeitig ausgelesen werden. Die aus dem Retuschespeicher 49 ausgelesenen Retuschefaktoren werden über einen Datenbus 57 an den Korrekturwertgeber 40 gegeben, in dem sie nach den angegebenen Gleichungen mit den im Farbgeber 38 berechneten Farbinkrementen $\Delta F$ multipliziert werden, um die Korrekturwerte $F_R$ zu erhalten. Die Korrekturwerte $F_R$ werden über Datenleitungen 58, 59, 60 und 61 an die digitalen Addierstufen 15, 16, 17 und 18 in den einzelnen Farbkanäle übermittelt.

Um wahlweise den vom Koordinatenstift 51 markierten Bildpunkt (Mittelpunkt der Pinselfläche) oder die gesamte Pinselfläche sichtbar zu machen, ist in den Bildschirm 3 des Farbmonitors 2 eine Lichtmarke 31 eingeblendet, die in dem Lichtmarkengenerator 21 erzeugt wird. Die Bewegung des Koordinatenstiftes 51 ist mit der Bewegung der Lichtmarke 31 synchronisiert. Dazu werden die in der Auswerte-Schaltung 48* ermittelten Bildpunkt-Koordinaten bzw. Adressen über einen Adressbus 53' an das Speichersteuerwerk 8 übermittelt und dort mit den zyklisch aufgerufenen Adressen des Bildwiederholspeichers 7 verglichen. Bei Adressengleichheit entsteht ein Befehl Lichtmarke auf einer Leitung 34, und der Lichtmarkengenerator 21 erzeugt die bewegliche Lichtmarke 31 auf dem Bildschirm 3.

Die Erfindung ist nicht die Ermittlung der Retuschefaktoren aus der Anzahl der Bildpunkt-Berührungen beschränkt. Es liegt vielmehr im Rahmen der Erfindung, die Retuschefaktoren auch aus dem mechanischen Druck, mit dem der Koordinatenstift 51 auf das Digitalisiertablett 50 gedrückt wird, oder aber aus der Verweildauer des Koordinatenstiftes 51 auf den entsprechenden Punkten des Digitalisiertabletts 50 zu bestimmen.

Im folgenden sollen die Bestimmung der Retuschefaktoren und der Aufbau des Retuschegebers 39* näher beschrieben werden.

Anhand der Fig. 7 wird zunächst die Berechnung der Bildpunkt-Koordinaten x und y innerhalb der Pinselfläche erläutert. Dargestellt ist ein Ausschnitt aus dem Digitalisiertablett 50 des Koordinaten-Erfassungsgerätes bzw. aus dem zu retuschierenden Bild mit zwei Positionen I und II der Pinselfläche 72 im X/Y-Koordinatensystem 74. In der Position I hat die Pinselfläche 72 die Mittelpunkt-Koordinaten $x_{o1}$ und $y_{o2}$ und in der Position II die Mittelpunkt-Koordinaten $x_{o2}$ und $y_{o2}$, wobei es sich bei den Punkten $P_1$ und $P_2$ um die mit dem Koordinatenstift 51 markierten Punkte handelt. Die Position II wurde durch die Bewegung des Koordinatenstiftes 51 entlang einer gestrichelten Linie 75 erreicht.

Der Pinselfläche 72 ist ein X'/Y'-Hilfskoordinatensystem 76 zugeordnet, das jeweils durch den Mittelpunkt P verläuft. In dem X'/Y'-Hilfskoordinatensystem 76 sind die Hilfskoordinaten x' und y' derjenigen Bildpunkte festgelegt, die an der Bildung einer Pinselfläche in bezug auf Form und Grösse beteiligt sind. Die entsprechenden Bildpunkt-Koordinaten x und y ergeben sich jeweils für die einzelnen momentanen Positionen der Pinselfläche im X/Y-Koordinatensystem 74 zu:

$$x = x_o + x' \quad (4)$$
$$y = y_o + y'$$

Fig. 8 zeigt ein detailliertes Ausführungsbeispiel für den Retuschegeber 39*, insbesondere für die Auswerte-Schaltung 48*. Der Retuschegeber 39* führt folgende Funktionen aus: Erfassung der Mittelpunkt-Koordinaten (a), Berechnung der Bildpunkt-Koordinaten (b) und Ermittlung der Retuschefaktoren (c).

(a) Erfassung der Mittelpunkt-Koordinaten ($x_o$;$y_o$)

Die Mittelpunkte P der Pinselfläche 72 (Fig. 7) werden mit dem Koordinatenstift 51 auf dem Digitalisiertablett 50 des Koordinaten-Erfassungsgerätes markiert, und die Messstufe 52 übermittelt die erfassten Bildpunkt-Koordinaten $x_o$ und $y_o$ über den Datenbus 53, eine Vergleichsstufe 77 und über einen weiteren Datenbus 78 an eine Addierstufe 79 in der Auswerte-Schaltung 48*.

Derartige Koordinaten-Erfassungsgeräte sind im Handel erhältlich (z.B. Firma Summagraphics, 35 Brentwood Ave., Fairfiels USA) und dem Fachmann bekannt, so dass sich eine ausführliche Beschreibung erübrigt. Bei dem Koordinaten-Erfassungsgerät des Ausführungsbeispiels werden die Koordinaten zunächst mit einer wesentlich höheren Auflösung ermittelt als die Auflösung des gespeicherten und dargestellten Bildes aus 512 × 512 Bildpunkten, wodurch eine hohe Messgenauigkeit erzielt wird. Die gemessenen Koordinaten werden dann in der Messstufe 52 auf die möglichen 512 × 512 Koordinaten $x_o$ und $y_o$ bzw. Adressen ungerechnet und ausgegeben.

b) Berechnung der Bildpunkt-Koordinaten (x;y)

In der Vergleichsstufe 77 werden laufend aufeinanderfolgende Paare von Mittelpunkt-Koordinaten $x_o$ und $y_o$ miteinander verglichen. Bei einem Koordinatenwechsel, der bei einer Verschiebung des Koordinatenstiftes 51 auftritt, liefert die Vergleichsstufe 77 einen Befehl Koordinatenwechsel auf einer Leitung 80 an einen Adresszähler 81. Der Adresszähler 81, jeweils von dem Befehl Koordinatenwechsel gestartet, ruft zyklisch und zeilenweise alle möglichen Koordinaten des X'/Y'-Hilfskoordinatensystems 76 auf, die über einen Datenbus 82 einem Koordinatenrechner 83 zur Ermittlung der Hilfskoordinaten x' und y' zugeführt werden. Der Koordinatenrechner 83 ist über einen Programmiereingang 84 mit den Parametern der gewünschten Pinselfläche nach einer der Fig. 3a bis 3c programmiert. Im Ausführungsbeispiel möge eine kreisförmige Pinselfläche gewünscht sein, deren Grösse durch den Radius R vorgegeben ist.

Die vom Adresszähler 81 aufgerufenen Koordinaten werden in dem Koordinatenrechner 83 daraufhin untersucht, ob sie die Kreisgleichung $x'^2 + y'^2 = R^2$ für die Pinselfläche erfüllen. Die der Kreisgleichung genügenden Koordinaten sind die Hilfskoordinaten x' und y' der Pinselfläche. Die Hilfskoordinaten x' und y' werden über einen Datenbus 85 an die Addierstufe 79 gegeben, in der gemäss Gleichung (4) die Bildpunkt-Koordinaten x und y gebildet werden.

Der Rechenablauf im Koordinatenrechner 83 für das Beispiel einer kreisförmigen Pinselfläche mit dem Radius R veranschaulicht ein Flussdiagramm in Fig. 9.

In einem alternativen Ausführungsbeispiel kann der Koordinatenrechner 83 auch einen von den aufgerufenen Koordinaten adressierbaren Maskenspeicher enthalten, in den die gewünschte Pinselfläche einprogrammiert ist. Die Maskeninformation steuert eine Torschaltung für die aufgerufenen Koordinaten in der Weise, dass nur die in die Pinselfläche fallenden Koordinatenwerte als Hilfskoordinaten x' und y' durchgelassen werden. Diese alternative Ausführungsform findet mit Vorteil bei beliebig geformten Pinselflächen Anwendung.

(c) Ermittlung der Retuschefaktoren

Zunächst werden die Bewertungsfaktoren w für die Bildpunkt der Pinselfläche festgestellt. Dazu adressieren die Hilfskoordinaten x' und y' über einen Adressbus 86 einen Bewertungsspeicher 87, in den zuvor die gewünschten Bewertungsfaktoren w der Pinselfläche nach dem Bewertungsschema der Fig. 5 und 6 über einen Programmiereingang 88 eingegeben wurden. Der Bewertungsspeicher 87 hat eine Kapazität, die mindestens der Anzahl der auf die grösste Pinselfläche entfallenden Bildpunkte entspricht.

Die Bewertungsfaktoren w werden aus dem Bewertungsspeicher 87 über einen Datenbus 89 in einen Prozessrechner 90 überschrieben. Die in der Addierstufe 79 berechneten Bildpunkt-Koordinaten x und y der Pinselfläche adressieren über einen Adressbus 91 einen Arbeitsspeicher 92 zur zwischenzeitlichen Ablage der Retuschefaktoren. Die unter den angewählten Adressen des Arbeitsspeichers 92 abgelegten Retuschefaktoren werden über einen Datenbus 93 in den Prozessrechner 90 eingelesen, den Korrekturschritten und Bewertungsfaktoren entsprechend geändert und wieder in den Arbeitsspeicher 92 zurückgeschrieben. Dieser Vorgang wiederholt sich bei jedem Befehl Koordinatenwechsel der dem Prozessrechner 90 von der Vergleichsstufe 72 über eine Leitung 94 gemeldet wird, wobei jeweils alle Bewertungsfaktoren der Pinselfläche zyklisch aus dem Bewertungsspeicher 87 ausgelesen und die den momentanen Positionen der Pinselfläche zugeordneten Retuschefaktoren im Arbeitsspeicher 92 entsprechend geändert werden.

Wird der Befehl Koordinatenwechsel, wie zuvor beschrieben, jeweils bei Änderung der Mittelpunkt-Koordinaten gegeben, überlappen sich die Pinselflächen bei der Bewegung des Koordinatenstiftes 51. Soll keine Überlappung stattfinden, wird der Befehl Koordinatenwechsel in der Vergleichsstufe 77 so lange verzögert, bis die neuen Mittelpunkt-Koordinaten der kreisförmig angenommenen Pinselfläche von den alten mindestens den Abstand R haben.

Entsprechend der angenommenen 512 × 512 Bildpunkte des zu retuschierenden Farbbildes hat der Arbeitsspeicher 92 sowie der Retuschespeicher 49 eine Kapazität von 512 × 512 × 8 bit, so dass pro Bildpunkt (Adresse) ein Retuschefaktor bis zum Wert 255 gespeichert werden kann.

Auf diese Weise entsteht im Arbeitsspeicher 92 in Form der gespeicherten Retuschefaktoren r jeweils ein Schema der momentanen, örtlichen Verteilung der gewünschten Retuschestärke im Farbbild, wobei im zu retuschierenden Bildteil $r \neq 0$ und ausserhalb dieses Bildteils $r = 0$ ist.

Wie bereits beschrieben, werden die Retuschefaktoren während der Austastlücke der Bildaufzeichnung, durch den Befehl Austastlücke auf der Leitung 10 signalisiert, mittels des Prozessrechners 90 über den Datenbus 55 in den Retuschespeicher 49 transferiert.

Die Erfindung wird mit Vorteil auf dem gesamten Gebiet der elektronischen Reproduktionstechnik angewendet, insbesondere auf dem Gebiet der Farbbildreproduktion, mittels elektronischer Farbscanner und Bildverarbeitungssysteme zur Herstellung von retuschierten und korrigierten Druckformen in Form von Farbauszügen oder Druckzylindern.

*Bezugszahlen*

| | |
|---|---|
| 1 | Speichermedium |
| 2 | Farbmonitor |
| 3 | Bildschirm |
| 4 | Prozessrechner |
| 5 | Datenbus |
| 6 | Datenbus |
| 7 | Bildwiederholspeicher |
| 8 | Speichersteuerwerk |
| 9 | Adressbus |
| 10 | Leitung |
| 11 | Datenleitung |
| 12 | Datenleitung |
| 13 | Datenleitung |
| 14 | Datenleitung |
| 15 | Addierstufe |
| 16 | Addierstufe |
| 17 | Addierstufe |
| 18 | Addierstufe |
| 19 | Korrekturschaltung |
| 20 | Datenbus |
| 21 | Lichtmarkengenerator |
| 22 | D/A-Wandler |
| 23 | Drucknachbildungsrechner |
| 24 | Taktgenerator |
| 25 | Leitung |
| 26 | Leitung |
| 27 | Leitung |
| 28 | Leitung |
| 29 | Leitung |

30 Leitung
31 Lichtmarke
32 Koordinaten-Steuerhebel
33 Adressenleitung
34 Leitung
35 Messwertspeicher
36 Schreibeingang
37 Eingabestufe
38 Farbgeber
39* Retuschegeber
40 Korrekturwertgeber
41 Leitung
42 Datenbus
43 Datenbus
44 Datenleitung
45 Datenleitung
46 Datenleitung
47 Datenleitung
48* Auswerte-Schaltung
49 Retuschespeicher
50 Digitalisiertablett
51 Koordinatenstift
52 Messstufe
53 Adressbus
54 Adressbus
55 Datenbus
56 Leitung
57 Datenbus
58 Datenleitung
59 Datenleitung
60 Datenleitung
61 Datenleitung
62 Leitung
63 Leitung
64 Leitung
65 —
66 —
67 —
68 Leitung
69 Leitung
70 Datenbus
71 Bildpunkt
72 Pinselfläche
73 Linie
74 Koordinatensystem
75 Linie
76 Hilfskoordinatensystem
77 Vergleichsstufe
78 Datenbus
79 Addierstufe
80 Leitung
81 Adresszähler
82 Datenbus
83 Koordinatenrechner
84 Programmiereingang
85 Datenbus
86 Adressbus
87 Bewertungsspeicher
88 Programmiereingang
89 Datenbus
90 Prozessrechner
91 Adressbus
92 Arbeitsspeicher
93 Datenbus
94 Leitung

**Patentansprüche**

1. Verfahren zur partiellen elektronischen Retusche bei der Farbbildreproduktion, bei dem die durch bildpunktweise und trichromatische Vorlagenabtastung gewonnenen Farbsignale der einzelnen Farbkomponenten digitalisiert und als Farbwerte auf einem Speichermedium abgelegt werden, bei dem zur Durchführung eines Korrekturschritts jeweils eine Anzahl Farbwerte innerhalb eines auf dem zu retuschierenden Bild verschiebbaren Korrekturbereichs gleichzeitig markiert und für diese Farbwerte bildpunktmässig zugeordnete und schrittweise änderbare Korrekturwerte ermittelt werden und bei dem die markierten Farbwerte durch die Korrekturwerte unter Sichtkontrolle geändert werden, um die retuschierten Farbwerte zu erhalten, dadurch gekennzeichnet, dass die einzelnen Beträge, um welche die Korrekturwerte ($Y_R$, $M_R$, $C_R$, $K_R$) für die innerhalb des Korrekturbereichs (72) (Pinselfläche) liegenden Bildpunkt pro Korrekturschritt geändert werden, durch freie Wahl von Bewertungsfaktoren (w) vorgebbar sind.

2. Verfahren nach Anspruch 1, dadurch gekennzeichnet, dass für alle Korrekturwerte ($Y_R$, $M_R$, $C_R$, $K_R$) des Korrekturbereichs (72) gleiche Änderungsbeträge vorgegeben werden, wodurch innerhalb des Korrekturbereichs eine gleichmässige Retuschestärke erzielt wird.

3. Verfahren nach Anspruch 1, dadurch gekennzeichnet, dass für die Korrekturwerte ($Y_R$, $M_R$, $C_R$, $K_R$) vom Zentrum des Korrekturbereichs (72) zu dessen Rand abnehmende Änderungsbeträge vorgegeben werden, wodurch innerhalb des Korrekturbereichs eine graduelle (verlaufende) Retuschestärke erzielt wird.

4. Verfahren nach Anspruch 3, dadurch gekennzeichnet, dass die Änderungsbeträge nach einer wählbaren Funktion, insbesondere nach einer Gauss-Funktion, vorgegeben werden.

5. Verfahren nach einem der Ansprüche 1 bis 4, dadurch gekennzeichnet, dass die Korrekturwerte ($Y_R$, $M_R$, $C_R$, $K_R$) zu den bildpunktmässig zugeordneten Farbwerten (Y, M, C, K) hinzuaddiert (Positiv-Retusche) oder von diesen abgezogen werden (Negativ-Retusche).

6. Verfahren nach einem der Ansprüche 1 bis 5, dadurch gekennzeichnet, dass

a) für die einzelnen Farbkomponenten Farbinkremente ($\Delta Y$, $\Delta M$, $\Delta C$, $\Delta K$) vorgegeben werden, welche die kleinsten Änderungsbeträge für die Korrekturwerte ($Y_R$, $M_R$, $C_R$, $K_R$) sind,

b) die Bildpunkt-Koordinatenpaare (x,y) der Farbwerte (Y, M, C, K) des Korrekturbereichs (72) festgestellt werden,

c) für jedes festgestellte Bildpunkt-Koordinatenpaar (x,y) pro Korrekturschritt ein die Retuschestärke bestimmender Retuschefaktor (r) ermittelt wird, welcher den Korrekturwert ($Y_R$, $M_R$, $C_R$, $K_R$) als Anzahl der zu addierenden Farbinkremente angibt, und

d) bildpunktmässig zugehörige Retuschefaktoren (r) und Farbinkremente ($\Delta Y$, $\Delta M$, $\Delta C$, $\Delta K$) miteinander multipliziert werden, um die jeweiligen Korrekturwerte ($Y_R$, $M_R$, $C_R$, $K_R$) zu erhalten.

7. Verfahren nach einem der Ansprüche 1 bis 6, dadurch gekennzeichnet, dass

a) mindestens ein Bildpunkt-Koordinatenpaar ($x_o$, $y_o$) des Korrekturbereichs (72) durch Markieren mittels einer Markiervorrichtung eines Koordinaten-Erfassungsgerätes (50, 51, 52), insbesondere mittels eines Koordinatenstiftes (51), erfasst wird, und

b) die restlichen Bildpunkt-Koordinatenpaare (x,y) des Korrekturbereichs (72) in Abhängigkeit vom markierten Bildpunkt-Koordinatenpaar ($x_o$, $y_o$) berechnet werden.

8. Verfahren nach Anspruch 7, dadurch gekennzeichnet, dass durch Auswahl der zu berechnenden Bildpunkt-Koordinatenpaare (x,y) um das markierte Bildpunkt-Koordinatenpaar ($x_o$, $y_o$) Form und Grösse des Korrekturbereichs (72) festgelegt werden.

9. Verfahren nach einem der Ansprüche 1 bis 8, dadurch gekennzeichnet, dass

a) jede Punkt-Berührung mit der Markiervorrichtung (51) des Koordinaten-Erfassungsgerätes (50, 51, 52) einem Korrekturschritt entspricht, und

b) jeder Retuschefaktor (r) für ein Bildpunkt-Koordinatenpaar (x,y) des Korrekturbereichs (72) aus der Anzahl von Punkt-Berührungen (n) und einem für das betreffende Bildpunkt-Koordinatenpaar vorgegebenen Bewertungsfaktor (w) berechnet wird, welcher den Änderungsbetrag des betreffenden Korrekturwertes ($Y_R$, $M_R$, $C_R$, $K_R$) pro Punkt-Berührung als Vielfache der Farbinkremente ($\Delta Y$, $\Delta M$, $\Delta C$, $\Delta K$) angibt, wobei der Koordinatenstift (51) wie ein Retuschepinsel über den zu retuschierenden Bildteil geführt wird, um den Korrekturbereich (Pinselfläche) zu verschieben.

10. Verfahren nach einem der Ansprüche 1 bis 9, dadurch gekennzeichnet, dass die digitalen Farbwerte (Y, M, C, K) aus dem Speichermedium (1) ausgelesen, durch die Korrekturwerte ($Y_R$, $M_R$, $C_R$, $K_R$) geändert und die korrigierten Farbwerte (Y', M', C', K') nach beendeter Retusche wieder auf dem Speichermedium (1) abgelegt werden.

11. Verfahren nach einem der Ansprüche 1 bis 10, dadurch gekennzeichnet, dass das unretuschierte oder retuschierte Farbbild (Original) bzw. ein unretuschierter oder retuschierter Farbauszug zur Sichtkontrolle auf einem Monitor (2) dargestellt wird, dass in einen Bildschirm (3) eine verschiebbare Lichtmarke (31) eingeblendet wird, und dass die Bewegung der Lichtmarke (31) mit der Bewegung des Koordinatenstiftes (51) des Koordinaten-Erfassungsgerätes (50, 51, 52) synchronisiert wird.

12. Verfahren nach einem der Ansprüche 1 bis 11, dadurch gekennzeichnet, dass die digitalen Farbwerte (Y, M, C, K) der einzelnen Farbauszüge aus dem Speichermedium (1) in einen Bildwiederholspeicher (7) geladen werden, und dass der Bildwiederholspeicher (7) zur punktweisen Aufzeichnung auf dem Monitor (2) zyklisch ausgelesen wird.

13. Verfahren nach einem der Ansprüche 6 bis 12, dadurch gekennzeichnet, dass die ermittelten Retuschefaktoren (r) bildpunktweise in einen Retuschespeicher (49) überschrieben werden, und dass der Retuschespeicher (49) zur bildpunktmässigen Zuordnung von Farbwerten (Y, M, C, K) und Korrekturwerten ($Y_R$, $M_R$, $C_R$, $K_R$) synchron mit dem Bildwiederholspeicher (7) angelesen wird.

14. Verfahren nach Anspruch 13, dadurch gekennzeichnet, dass die durch den Korrekturvorgang geänderten Retuschefaktoren (r) jeweils in eine Austastlücke der Bildaufzeichnung in den Retuschespeicher (49) überschrieben werden.

15. Verfahren nach einem der Ansprüche 13 oder 14, dadurch gekennzeichnet, dass die Bildpunkt-Koordinatenpaare (x,y) der markierten Punkte in der Reihenfolge ihrer Erfassung listenmässig abgelegt werden, und dass die Bildpunkt-Koordinatenpaare (x,y) in umgekehrter Reihenfolge aufgerufen und die entsprechenden Retuschefaktoren (r) in dem Retuschespeicher (49) geändert werden, um die bei den vorherigen Berührungen der Punkte erfolgte Retusche konturengenau rückgängig zu machen.

16. Verfahren nach einem der Ansprüche 13 bis 15, dadurch gekennzeichnet, dass die gesamte Korrektur durch Löschen des Retuschespeichers (49) rückgängig gemacht wird.

17. Verfahren nach einem der Ansprüche 1 bis 16, dadurch gekennzeichnet, dass die Pinselfläche durch eine entsprechend vergrösserte Lichtmarke (31) angezeigt wird.

18. Verfahren nach einem der Ansprüche 1 bis 17, dadurch gekennzeichnet, dass der zu retuschierende Bildteil durch eine elektronisch erzeugte Maske begrenzt wird.

19. Anordnung zur Durchführung des Verfahrens nach Anspruch 1, bestehend aus einem Speichermedium für die Farbwerte der einzelnen Farbauszüge, einem nachgeschalteten Bildwiederholspeicher und aus einem mit dem Bildwiederholspeicher verbundenen Monitor für die Sichtkontrolle, gekennzeichnet durch einen Farbgeber (38) zur Bildung der Farbinkremente ($\Delta Y$, $\Delta M$, $\Delta C$, $\Delta K$), einen Retuschegeber (39*) zur Bildung der Retuschefaktoren (r) für die zu korrigierenden Farbwerte (Y, M, C, K), einen Bewertungsspeicher (87), der einen Programmiereingang (88) für die gewünschten Bewertungsfaktoren (w) des Korrekturbereichs (72) aufweist, einen mit dem Farbgeber (38) und dem Retuschegeber (39*) verbundenen Korrekturwertgeber (40) zur Bildung der Korrekturwerte ($Y_R$, $M_R$, $C_R$, $K_R$), und durch dem Bildwiederholspeicher (7) nachgeschaltete Verknüpfungsstufen (15, 16, 17, 18) in den Farbkanälen zur Änderung der Farbwerte durch die Korrekturwerte.

20. Anordnung nach Anspruch 19, dadurch gekennzeichnet, dass der Retuschegeber (39*) aus einem Koordinaten-Erfassungsgerät (50, 51, 52) zur Ermittlung der Bildpunkt-Koordinaten (x,y) der zu korrigierenden Farbwerte, aus einer mit dem Koordinaten-Erfassungsgerät (50, 51, 52) verbundenen Auswerte-Schaltung (48*) zur Bildung der Retuschefaktoren (r) für jedes erfasste Koordinatenpaar und aus einem mit der Auswerte-Schaltung (48*) verbundenen Retuschespeicher (49) besteht.

## Claims

1. Method for partial electronic retouching in colour image reproduction, in which the colour signals obtained by dot-by-dot and trichromatic scanning of originals are digitalized and stored as colour values on a storage medium, in which for the purpose of performing a correction step, a number of colour values is in each case marked simultaneously within a correction area movable over the image which is to be retouched, and correction values are determinated for these colour values, which are assigned to image dots and variable in steps, and in which the marked colour values are modified by the correction values under visual control to obtain the retouched colour values, characterized in that the individual quantities by which the correction values ($Y_R$, $M_R$, $C_R$, $K_R$) of the image dots lying within the correction area (72) (brushing area) are modified per correction step may be preset by free selection of weighting factors (w).

2. Method according to Claim 1, characterized in that identical modifying quantities are preset for all the correction values ($Y_R$, $M_R$, $C_R$, $K_R$) of the correction area (72) thereby securing a uniform retouching intensity within the correction area.

3. Method according to Claim 1, characterized in that modifying quantities are preset for the correction values ($Y_R$, $M_R$, $C_R$, $K_R$) and diminish from the centre of the correction area (72) towards its edge, thereby obtaining a gradual (graduated) retouching intensity within the correction area.

4. Method according to Claim 3, characterized in that the modifying quantities are preset in accordance with a selectable function, in particular in accordance with a Gaussian function.

5. Method according to one of the Claims 1 to 4, characterized in that the correction values ($Y_R$, $M_R$, $C_R$, $K_R$) are added (positive retouching) to the colour values (Y, M, C, K) assigned to the image dots or are subtracted from these (negative retouching).

6. Method according to one of the Claims 1 to 5, characterized in that

a) colour increments ($\Delta Y$, $\Delta M$, $\Delta C$, $\Delta K$) which are the minimum modifying quantities for the correction values ($Y_R$, $M_R$, $C_R$, $K_R$) are preset for the individual colour components,

b) the image dot co-ordinate pairs (x,y) of the colour values (Y, M, C, K) of the correction area (72) are determined,

c) a retouching factor (r) which indicates the correction values ($Y_R$, $M_R$, $C_R$, $K_R$) as the number of the colour increments which are to be added and which defines the retouching intensity, is established per correction step for each image dot co-ordinate pair (x,y) determined, and

d) retouching factors (r) assigned to the image dots and colour increments ($\Delta Y$, $\Delta M$, $\Delta C$, $\Delta K$) are multiplied one with the other to obtain the momentary correction values ($Y_R$, $M_R$, $C_R$, $K_R$).

7. Method according to one of the Claims 1 to 6, characterized in that

a) at least one image dot co-ordinate pair ($x_o$, $y_o$), of the correction area (72) is indicated by marking by means of a marking device of a co-ordinate detection device (50, 51, 52) in particular by means of a co-ordinate stylus (51), and

b) the residual image dot co-ordinate pairs (x,y) of the correction area (72) are calculated as a function of the marked image dot co-ordinate pair ($x_o$, $y_o$).

8. Method according to Claim 7, characterized in that the form and size of the correction area (72) are determined by selection of the image dot co-ordinate pairs (x,y) which are to be calculated, around the marked image dot co-ordinate pair ($x_o$, $y_o$).

9. Method according to one of the Claims 1 to 8, characterized in that

a) each contact with an image dot with the marking device (51) of the co-ordinate detection device (50, 51, 52) corresponds to a correction step, and

b) each retouching factor (r) for an image dot co-ordinate pair (x,y) of the correction area (72) is calculated from the number of contacts (n) and a weighting factor (w) preset for the particular image dot co-ordinate pair, which indicates the modifying quantity of the corresponding correction value ($Y_R$, $M_R$, $C_R$, $K_R$) per contact as a multiple of the colour increments ($\Delta Y$, $\Delta M$, $\Delta C$, $\Delta K$), the co-ordinate stylus (51) being stroked over the image section which is to be retouched like a retouching brush, to shift the correction area (brushing area).

10. Method according to one of the Claims 1 to 9, characterized in that the digital colour values (Y, M, C, K) are read out from the storage medium (1), are modified by the correction values ($Y_R$, $M_R$, $C_R$, $K_R$), and the corrected colour values (Y', M', C', K',) are stored in the storage medium (1) again after completion of the retouching operation.

11. Method according to one of the Claims 1 to 10, characterized in that the non-retouched or retouched colour image (original), or a non-retouched or retouched colour separation is displayed on a monitor (2) for visual control, that a movable light mark (31) is gated into the image screen (3) of the monitor (2) and that the movement of the light mark (31) is synchronized with the displacement of the co-ordinate stylus (51) of the co-ordinate detection device (50, 51, 52).

12. Method according to one of the Claims 1 to 11, characterized in that the digital colour values (Y, M, C, K) of the individual colour separations are transferred from the storage medium (1) into an image refresh memory (7), and that the image refresh memory (7) is read cyclically for dot-by-dot display on the monitor (2).

13. Method according to one of the Claims 6 to 12, characterized in that the retouching factors (r) are written dot-by-dot into a retouching memory (49), and that the retouching memory (49) is read out synchronously with the image refresh memory (7) for dot-by-dot correlation of colour values (Y, M, C, K) and correction values ($Y_R$, $M_R$, $C_R$, $K_R$).

14. Method according to Claim 13, characterized in that the retouching factors (r) modified by the corrective action are in each case written into the retouching memory (49) during a blanking interval of the image display.

15. Method according to one of the Claims 13 or 14, characterized in that the image dot co-ordinate pairs (x,y) of the dots marked are stored tabularly in the sequence of their detection, and that the image dot co-ordinate pairs (x,y) are called up in reverse order and the corresponding retouching factors (r) in the retouching memory (49) are modified so that the retouching action performed during previous contact with the image dots may be cancelled with precise outlines.

16. Method according to one of the Claims 13 to 15, characterized in that the entire correction is neutralized by erasing of the retouching memory (49).

17. Method according to one of the Claims 1 to 16, characterized in that the brushing area is indicated by an appropriately enlarged light mark (31).

18. Method according to one of the Claims 1 to 17, characterized in that the image section which is to be retouched is delimited by an electronically generated mask.

19. Arrangement for application of the method according to Claim 1, comprising a storage medium for the colour values of the individual colour separations, a post-connected image refresh memory and a monitor intended for visual control which is connected to the image refresh memory, characterized by a colour generator (38) for the forming of the colour increments ($\Delta Y$, $\Delta M$, $\Delta C$, $\Delta K$), a retouching generator (39*) for the forming of retouching factors (r) for the colour values (Y, M, C, K) which are to be corrected, a weighting memory (87), which comprises a programming input terminal (88) for the required weighting factors (w) of the correction area (72), a correction value generator (40) connected to the colour generator (38) and the retouching generator (39*) for the forming of the correction values ($Y_R$, $M_R$, $C_R$, $K_R$), and by interlinking stages (15, 16, 17, 18) in the colour channels, post-connected to the image refresh memory (7), for modification of the colour values by the correction values.

20. Arrangement as claimed in Claim 19, characterized in that the retouching generator (39*) comprises a co-ordinate detection device (50, 51, 52) for determining the image dot co-ordinates (x,y) of the colour values which are to be corrected, an evaluation circuit (48*) connected to the co-ordinate detection device (50, 51, 52) for the forming of the retouching factors (r) for each co-ordinate pair detected, and a retouching memory (49) connected to the evaluation circuit (48*).

## Revendications

1. Procédé pour le retouchage électronique partiel à la reproduction d'images en couleurs, selon lequel on numérise les différentes composantes de couleur des signaux de couleur obtenus par la détection ponctuelle d'image et trichrome du modèle, et on les enregistre comme valeurs de couleur sur un support d'enregistrement, selon lequel, pour exécuter un pas de correction, on repère simultanément un certain nombre de valeurs de couleur à l'intérieur d'une zone de correction déplaçable sur l'image à retoucher, et on détermine pour celle-ci des valeurs de couleur associées selon les points et des valeurs de correction modifiables pas à pas, et on modifie les valeurs de couleur repérées par les valeurs de correction, avec un contrôle visuel, pour obtenir les valeurs de couleur retouchées, caractérisé en ce que les différentes valeurs, dont on modifie les valeurs de correction ($Y_R$, $M_R$, $C_R$, $K_R$) pour les points d'image se trouvant dans la zone de correction (72) (surface de pinceau) par pas de correction, sont prédéterminées par le libre choix des coefficients de pondération (w).

2. Procédé selon la revendication 1, caractérisé en ce que, pour toutes les valeurs de correction ($Y_R$, $M_R$, $C_R$, $K_R$) de la zone de correction (72), on prédétermine les mêmes valeurs de modification, si bien que, à l'intérieur de la zone de correction, on obtient une intensité de retouche régulière.

3. Procédé selon la revendication 1, caractérisé en ce que, pour les valeurs de correction ($Y_R$, $M_R$, $C_R$, $K_R$), on prédétermine des valeurs de modification en partant du centre de la zone de correction (72) vers son bord, si bien que, à l'intérieur de la zone de correction, on obtient une intensité de retouche graduelle (fondu).

4. Procédé selon la revendication 3, caractérisé en ce que les valeurs de modification sont prédéterminées suivant une fonction choisie, notamment une fonction de Gauss.

5. Procédé selon l'une des revendications 1 à 4, caractérisé en ce que les valeurs de correction ($Y_R$, $M_R$, $C_R$, $K_R$) sont ajoutées (retouche positive) aux valeurs de couleur (Y, M, C, K) associées selon les points ou sont retranchées de ceux-ci (retouche négative).

6. Procédé selon l'une des revendications 1 à 5, caractérisé en ce que:

a) pour les différentes composantes de couleur, on prévoit des incréments de couleur ($\Delta Y$, $\Delta M$, $\Delta C$, $\Delta K$) qui sont les plus petites valeurs de modification pour les valeurs de correction ($Y_R$, $M_R$, $C_R$, $K_R$),

b) on fixe les paires de coordonnées de points (x,y) des valeurs de couleur (Y, M, C, K) de la zone de correction (72),

c) pour chaque paire de coordonnées de points (x,y) fixées par pas de correction, on détermine un coefficient de retouche (r) définissant l'intensité de la retouche et qui donne la valeur de correction ($Y_R$, $M_R$, $C_R$, $K_R$) comme nombre d'incréments de couleur à ajouter, et

d) on multiplie entre eux les coefficients de retouche (r) et les incréments de couleur ($\Delta Y$, $\Delta M$, $\Delta C$, $\Delta K$) qui se correspondent selon les points, pour obtenir les valeurs de correction respectives ($Y_R$, $M_R$, $C_R$, $K_R$).

7. Procédé selon l'une des revendications 1 à 6, caractérisé en ce que:

a) on détermine au moins une paire de coordonnées de points ($x_o$, $y_o$) de la zone de correction (72) par le repérage à l'aide d'un dispositif de repérage faisant partie d'un appareil de détection de coordonnées (50, 51, 52), notamment à l'aide d'un crayon à coordonnées (51), et

b) on calcule les autres paires de coordonnées de points (x,y) de la zone de correction (72) en fonction de la paire de coordonnées de points repérées ($x_o$, $y_o$).

8. Procédé selon la revendication 7, caractérisé en ce que, par un choix de la paire de coordonnées de points d'image (x,y) autour de la paire de coordonnées de points d'image repérées ($x_o$, $y_o$), on détermine la forme et les dimensions de la zone de correction (72).

9. Procédé selon l'une des revendications 1 à 8, caractérisé en ce que:

a) chaque contact ponctuel avec le dispositif de repérage (51) de l'appareil de détection de coordonnées (50, 51, 52) correspond à un pas de correction, et

b) on calcule chaque coefficient de retouche (r) pour une paire de coordonnées de points d'image (x,y) de la zone de correction (72) à partir du nombre de contacts ponctuels (n) et d'un coefficient de pondération (w) prédéterminé pour la paire de coordonnées de points d'image concernées, coefficient qui indique la valeur de modification de la valeur de correction concernée ($Y_R$, $M_R$, $C_R$, $K_R$) par contact ponctuel comme un multiple des incréments de couleur (ΔY, ΔM, ΔC, ΔK), le crayon à coordonnées (51) étant guidé comme un pinceau à retouches sur la partie de l'image à retoucher pour déplacer la zone de correction (surface de pinceau).

10. Procédé selon l'une des revendications 1 à 9, caractérisé en ce que les valeurs de couleur numériques (Y', M', C', K') sont lues sur le support d'enregistrement (1), sont modifiées par les valeurs de correction ($Y_R$, $M_R$, $C_R$, $K_R$), et les valeurs de couleur corrigées (Y', M', C', K') sont de nouveau, à la fin de la retouche, mises dans le support d'enregistrement (1).

11. Procédé selon l'une des revendications 1 à 10, caractérisé en ce que l'image en couleurs (original) non retouchée ou retouchée ou un extrait de couleur non retouché ou retouché est affiché sur un moniteur (2), pour le contrôle visuel, en ce qu'on insère un repère lumineux mobile (31) dans l'écran-image (3) et on synchronise le mouvement du repère lumineux (31) et le mouvement du crayon à coordonnées (51) de l'appareil de détection de coordonnées (50, 51, 52).

12. Procédé selon l'une des revendications 1 à 11, caractérisé en ce qu'on charge les valeurs de couleur numériques (Y, M, C, K) des différents extraits de couleur du support d'enregistrement (1) dans une mémoire de répétition d'image (7), et en ce qu'on lit la mémoire de répétition d'image (7) de façon cyclique pour l'inscription ponctuelle sur le moniteur (2).

13. Procédé selon l'une des revendications 6 à 12, caractérisé en ce qu'on transcrit les coefficients de retouche (r) déterminés dans une mémoire à retouches (49) par la détection ponctuelle d'image, et en ce qu'on lit la mémoire à retouches (49) pour l'association selon les points d'image entre les valeurs de couleur (Y, M, C, K) et les valeurs de correction ($Y_R$, $M_R$, $C_R$, $K_R$) en synchronisme avec la mémoire de répétition d'image (7).

14. Procédé selon la revendication 13, caractérisé en ce que les facteurs de retouche (r), modifiés selon l'opération de correction, sont chaque fois transcrits dans un intervalle de suppression de l'inscription d'image dans la mémoire à retouches (49).

15. Procédé selon l'une des revendications 13 ou 14, caractérisé en ce qu'on lit les paires de coordonnées de points d'image (x,y) des points repérés dans la succession de leur détection, selon des listes, et en ce qu'on appelle les paires de coordonnées de points d'image (x,y) dans l'ordre inverse et qu'on modifie les facteurs de retouche correspondants (r) dans la mémoire à retouches (49) pour annuler de façon précise, selon le contour, les retouches qui se sont faites lors des contacts précédents des points.

16. Procédé selon l'une des revendications 13 à 15, caractérisé en ce que l'ensemble de la correction est annulé par effacement de la mémoire à retouches (49).

17. Procédé selon l'une des revendications 1 à 16, caractérisé en ce qu'on affiche la surface de pinceau par un repère lumineux (31) agrandi de façon correspondante.

18. Procédé selon l'une des revendications 1 à 17, caractérisé en ce que la partie d'image à retoucher est délimitée par un masque généré de façon électronique.

19. Montage pour la mise en œuvre du procédé selon la revendication 1, composé d'un support d'enregistrement pour les valeurs des couleurs des différents extraits de couleur, d'une mémoire de répétition d'image prévue en aval et d'un moniteur relié à la mémoire de répétition d'image pour assurer le contrôle visuel, caractérisé par un générateur de couleur (ΔY, ΔM, ΔC, ΔK), un générateur de retouches (39*) pour former les coefficients de retouche (r) pour les valeurs de couleur à corriger (Y, M, C, K), une mémoire de pondération (87) qui comporte une entrée programmable (88) pour les coefficients de pondération (w) souhaités de la zone de correction (72), un générateur de valeurs de correction (40), relié au générateur de couleur (38) et au générateur de retouches (39*), pour former les valeurs de correction ($Y_R$, $M_R$, $C_R$, $K_R$), et les étages de combinaison (15, 16, 17, 18) prévus en aval de la mémoire de répétition d'image (7) dans les canaux de couleur pour changer les valeurs de couleur par les valeurs de correction.

20. Montage selon la revendication 19, caractérisé en ce que le générateur de retouches (39*) se compose d'un appareil de détection de coordonnées (50, 51, 52) pour déterminer les coordonnées de points d'image (x,y) des valeurs de couleur à corriger, d'un circuit d'exploitation (48*) relié à l'appareil de détection de coordonnées (50, 51, 52) pour former les coefficients de retouche (r) pour chaque paire de coordonnées détectées, et une mémoire à retouches (49) reliée au circuit d'exploitation (48*).

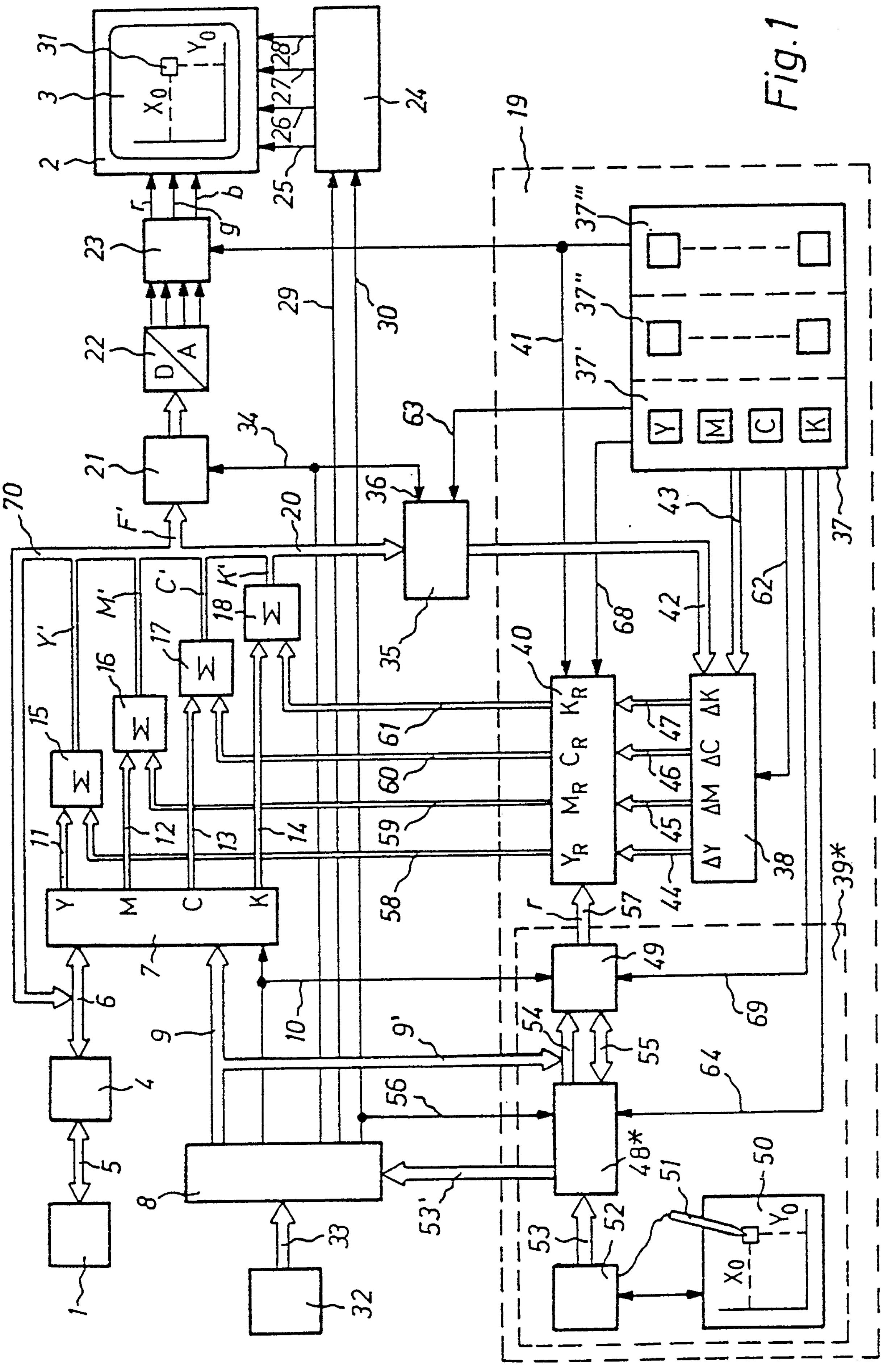


Fig.1

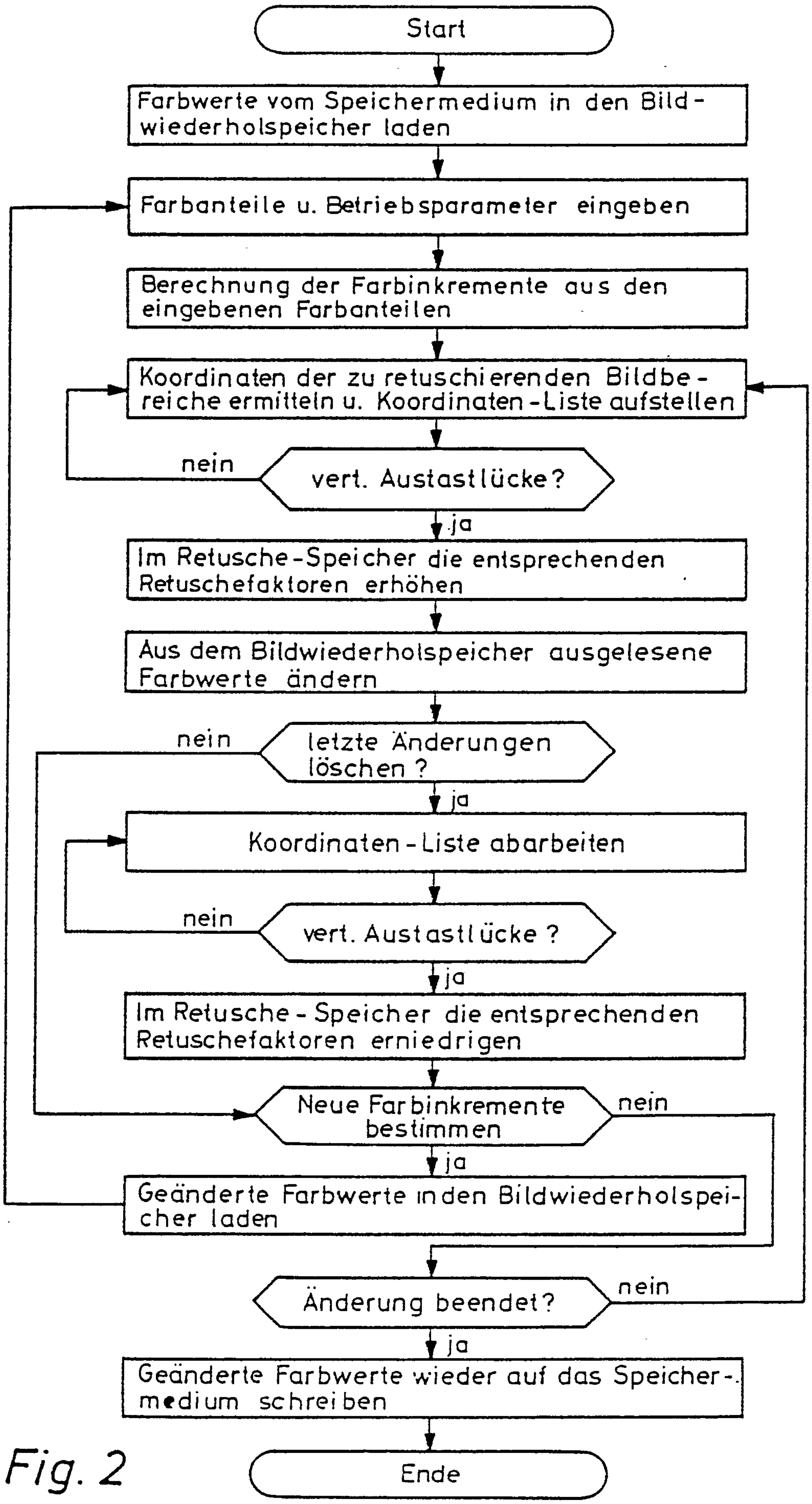
Start
Farbwerte vom Speichermedium in den Bildwiederholspeicher laden
Farbanteile u. Betriebsparameter eingeben
Berechnung der Farbinkremente aus den eingebenen Farbanteilen
Koordinaten der zu retuschierenden Bildbereiche ermitteln u. Koordinaten-Liste aufstellen
vert. Austastlücke?
nein
ja
Im Retusche-Speicher die entsprechenden Retuschefaktoren erhöhen
Aus dem Bildwiederholspeicher ausgelesene Farbwerte ändern
letzte Änderungen löschen?
nein
ja
Koordinaten-Liste abarbeiten
vert. Austastlücke?
nein
ja
Im Retusche-Speicher die entsprechenden Retuschefaktoren erniedrigen
Neue Farbinkremente bestimmen
nein
ja
Geänderte Farbwerte in den Bildwiederholspeicher laden
Änderung beendet?
nein
ja
Geänderte Farbwerte wieder auf das Speichermedium schreiben
Ende

*Fig. 2*

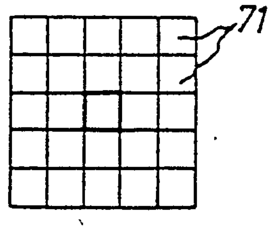


Fig. 3a

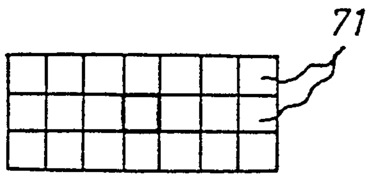


Fig. 3b

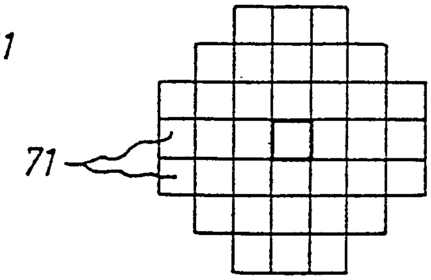


Fig. 3c

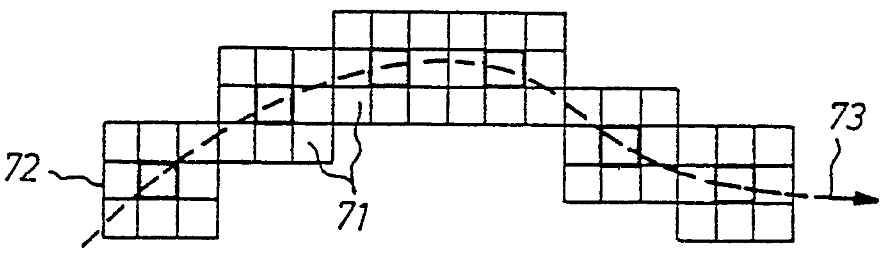


Fig. 4

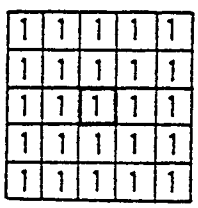


Fig. 5a

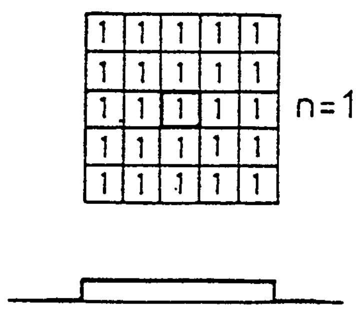


Fig. 5b

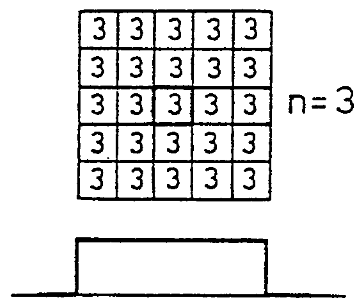


Fig. 5c

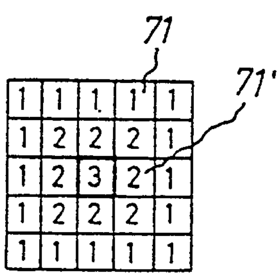


Fig. 6a

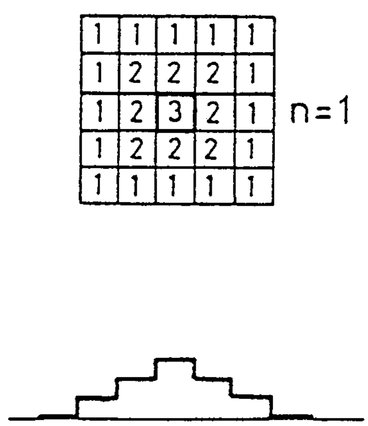


Fig. 6b

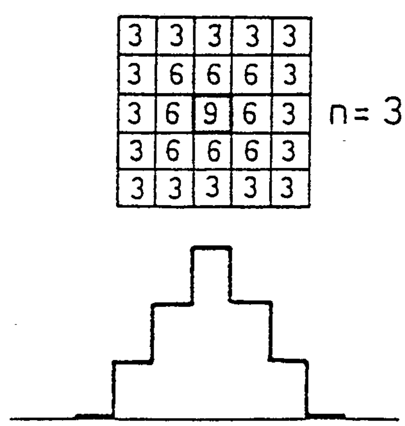


Fig. 6c

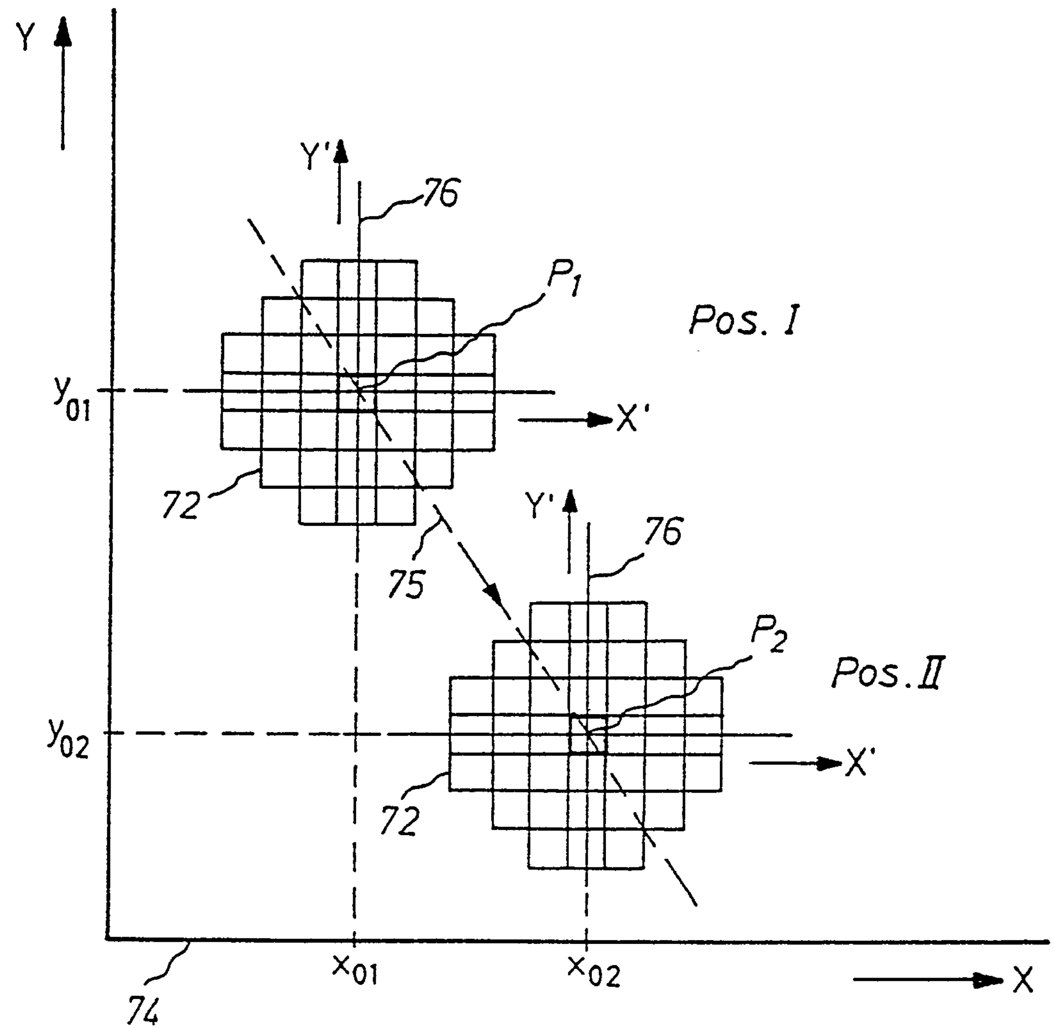


Fig. 7

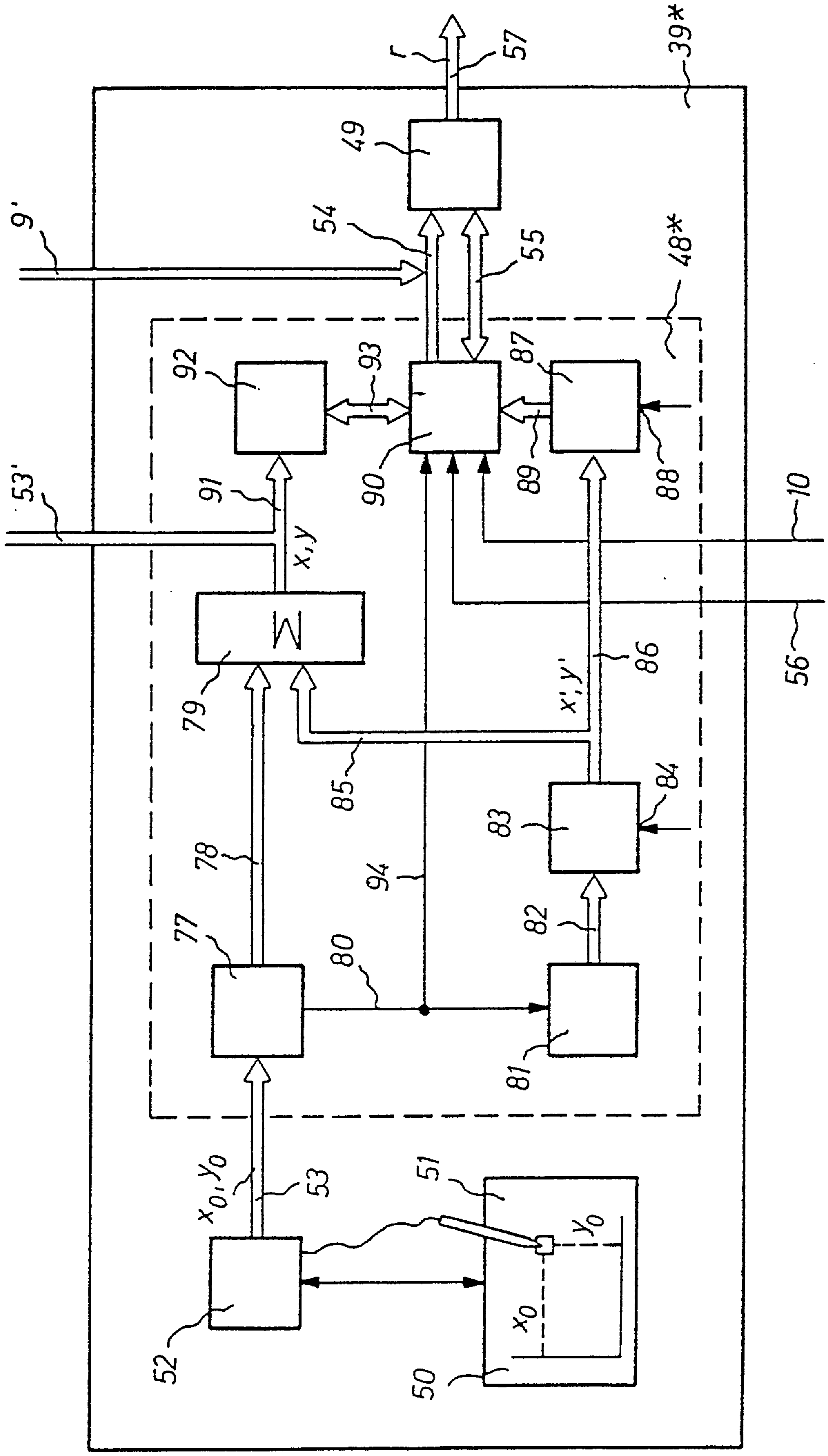
r
57
39*
49
9'
54
55
48*
92
93
87
90
89
88
53'
91
x,y
10
79
x',y'
86
56
85
84
83
78
94
77
80
82
81
$x_0,y_0$
53
51
$y_0$
$x_0$
52
50

Fig. 8

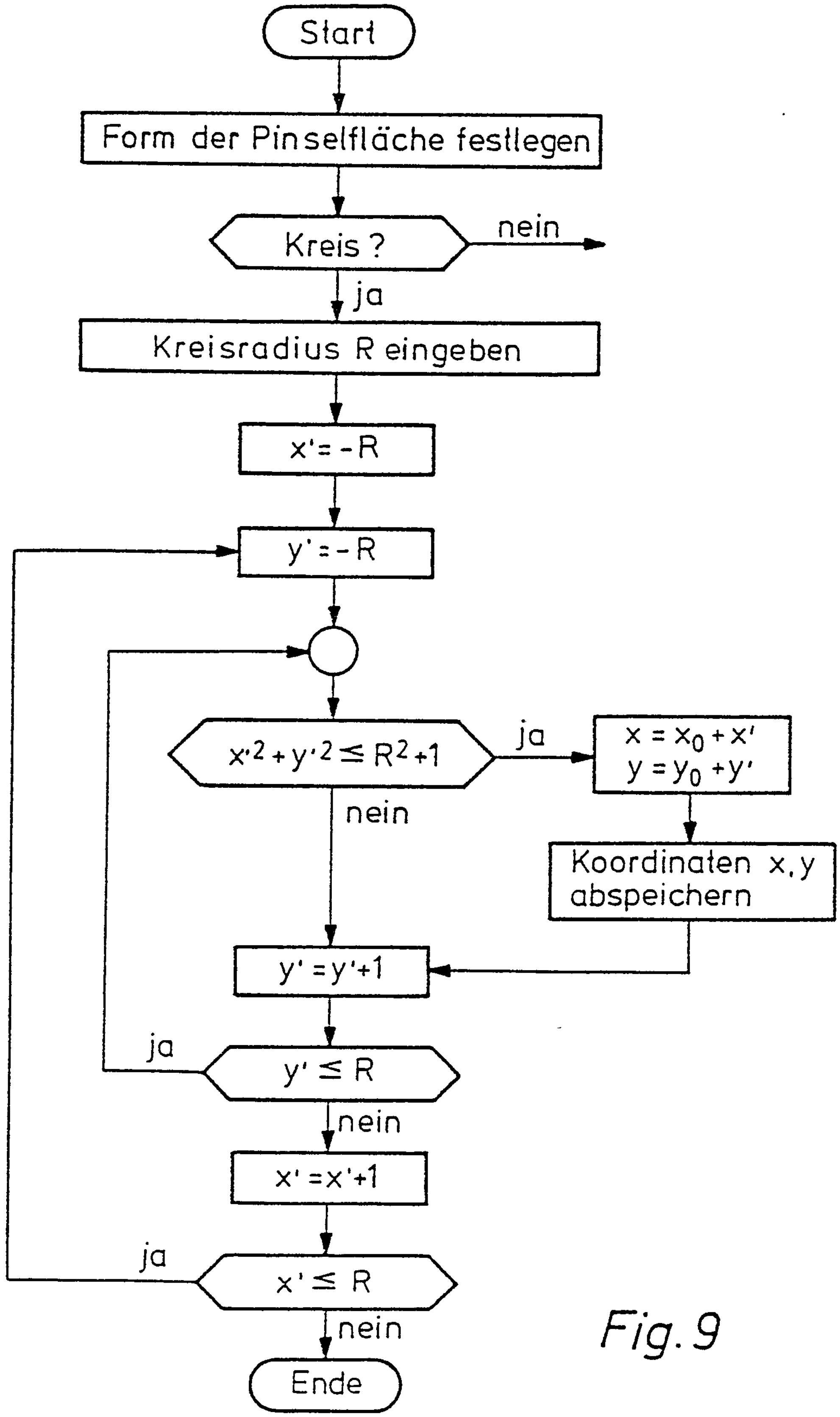
Start
Form der Pinselfläche festlegen
Kreis ?
nein
ja
Kreisradius R eingeben
x' = -R
y' = -R
x'2 + y'2 ≤ R2 +1
ja
x = x0 + x'
y = y0 + y'
nein
Koordinaten x, y
abspeichern
y' = y' +1
ja
y' ≤ R
nein
x' = x' +1
ja
x' ≤ R
nein
Ende

Fig. 9